# EUROPEAN PATENT SPECIFICATION

(11) **EP 2 660 826 B1**
(45) Date of publication and mention of the grant of the patent: **04.07.2018**
(21) Application number: 11852874.4
(22) Date of filing: 27.12.2011
(51) Int. Cl.: C01G 23/047, C08K 3/22, C08K 9/02, C08L 101/00, C09C 1/00, C09D 5/24, C09D 7/62, C09D 201/00, H01B 1/08, H01B 1/20, H01B 5/00

(54) **WHITE CONDUCTIVE POWDER, CONDUCTIVE MIXED POWDER, DISPERSION LIQUID, COATING MATERIAL, AND MEMBRANE COMPOSITION**
WEISSES LEITFÄHIGES PULVER, LEITFÄHIGES MISCHPULVER, DISPERSIONSFLÜSSIGKEIT, BESCHICHTUNGSMATERIAL UND MEMBRANENZUSAMMENSETZUNG
POUDRE CONDUCTRICE BLANCHE, POUDRE MÉLANGÉE CONDUCTRICE, LIQUIDE DE DISPERSION, MATÉRIAU DE REVÊTEMENT, ET COMPOSITION MEMBRANAIRE

(30) Priority: 28.12.2010 JP 2010292740
(43) Date of publication of application: 06.11.2013
(73) Proprietor: Mitsubishi Materials Electronic Chemicals Co., Ltd., Akita-shi Akita 010-8585 (JP)
(72) Inventor: SHIRAISHI Shinya, Akita-shi Akita 010-8585 (JP); UMEDA Hirotoshi, Akita-shi Akita 010-8585 (JP); SASAKI Suzuo, Akita-shi Akita 010-8585 (JP)
(74) Representative: Gille Hrabal
(86) International application number: PCT/JP2011/080230
(87) International publication number: WO 2012/091021

(56) References cited:
- WO-A1-2004/010439
- JP-A- 2009 199 776
- JP-A- 2010 157 448
- US-A- 5 061 473
- DATABASE WPI Week 199434 Thomson Scientific, London, GB; AN 1994-275993 XP002725382, -& JP H06 207118 A (TITANIUM KOGYO KK) 26 July 1994 (1994-07-26)

## Description

### TECHNICAL FIELD

The present invention relates to a white powder that does not contain antimony or the like and has conductivity and excellent whiteness. More specifically, the present invention relates to a white conductive powder that is excellent in photocatalytic activity, a conductive mixed powder, a dispersion liquid, a coating material, and a membrane composition. The white conductive powder of the present invention is applied to a conductive paper, an antistatic cloth, a conductive thread, an antistatic coating material, an antistatic wall, an antistatic roller, and the like.

### BACKGROUND ART

The conductive powder has been widely used as uses such as prevention of electrification, control of electrification, prevention of static electricity, dust proof, and the like. The white conductive powder in the related art includes a white powder such as titanium oxide and tin oxide that coats the white powder to increase conductivity. However, in the case where conductivity obtained by the coating of only the tin oxide is insufficient, the white powder is coated with antimony-doped tin oxide.

Specifically, as a white conductive powder that is improved in order for whiteness not to deteriorate, a white pigment is disclosed which includes a tin oxide conductive layer (coating layer) doped with antimony oxide. Particularly, a white conductive powder is disclosed in which a small amount of at least one kind of phosphorus, aluminum, and molybdenum is contained as an oxide in the coating layer (Patent Document 1 and Patent Document 2). In addition, a white conductive powder which includes a tin dioxide coating layer containing any one element selected from tungsten, niobium, tantalum, antimony, fluorine, and phosphorus, and application of the white conductive powder to an external toner additive for an electron-photography are disclosed (Patent Document 3).

However, from the viewpoints of prevention of environmental pollution, and the like, an antimony-free conductive material has been required. Accordingly, a white conductive titanium dioxide powder (antimony-free white conductive powder) is disclosed which includes titanium dioxide particles and coating layers on surfaces of the titanium dioxide particles, and in which the coating layers are formed from tin oxide including 0.1% by weight to 10% by weight of phosphorus, and which does not contain antimony (Patent Document 4).

However, the white conductive powders in the related art have a demerit that when being irradiated with light, particularly, ultraviolet rays, whiteness decreases (an L value in a Lab color system decreases). In addition, even being heated, the whiteness does not return to the original state.

In addition, photocatalytic activity may be required for the white conductive powder in uses such as the conductive paper, the antistatic cloth, the conductive thread, the antistatic coating material, the antistatic wall, and the antistatic roller, and it is necessary to cope with these uses.

### PRIOR ART DOCUMENT

### Patent Document

Patent Document 1: Japanese Unexamined Patent Application, First Publication No. H6-183708
Patent Document 2: Japanese Unexamined Patent Application, First Publication No. H6-183733
Patent Document 3: Japanese Unexamined Patent Application, First Publication No. 2004-349167
Patent Document 4: Japanese Unexamined Patent Application, First Publication No. H6-207118

### DISCLOSURE OF THE INVENTION

### Problems to be Solved by the Invention

The present invention aims to provide a white conductive powder capable of solving the above-described problems. That is, an object of the present invention is to provide a white conductive powder in which even when the white conductive powder is irradiated with ultraviolet rays, a variation in an L value in a Lab color system is small, or even when the white conductive powder is irradiated with ultraviolet rays and the L value decreases, the L value is restored by being heated. In addition, another object of the invention is to provide a white conductive powder that is excellent in photocatalytic activity and that is applicable to a photocatalytic use.

### Means for Solving the Problems

The characteristics related to a white conductive powder and a conductive mixed powder of the present invention are specified in the appended claims. Aspects of the present disclosure will be described below.
(1) There is provided a white conductive powder including: titanium oxide particles; and tin oxide particles that coat surfaces of the titanium oxide particles. The titanium oxide particles contain K, Mg, Nb, and Zr, and each thereof is contained at a content of 0.01% by mass to 0.5% by mass. A crystal structure of the titanium oxide particles is a rutile structure. An average particle size of the titanium oxide particles is in a range of 100 nm to 500 nm. An average particle size of the tin oxide particles is in a range of 1 nm to 50 nm.
(2) The white conductive powder as described in (1), wherein an absolute value of a difference between an L value in a Lab color system after irradiation of ultraviolet rays having an intensity of 0.25 mW/cm² up to an irradiation amount of 2 J/cm² at room temperature and an L value before the irradiation of the ultraviolet rays is in a range of 1 or less.
(3) The white conductive powder as described in (1) or (2), wherein an absolute value of a difference between an L value after irradiation of ultraviolet rays having an intensity of 0.25 mW/cm² up to an irradiation amount of 2 J/cm² at room temperature and then performing heating at 60°C for 60 minutes, and an L value before the irradiation of the ultraviolet rays is in a range of 1 or less.
(4) The white conductive powder as described in any one of (1) to (3), wherein acetaldehyde decomposition capability of the white conductive powder is higher than acetaldehyde decomposition capability of titanium oxide powder not coated with tin oxide particles.
(5) The white conductive powder as described in any one of (1) to (4), wherein the tin oxide particles contain phosphorus at a content of 0.1 to 10 parts by mass relative to 100 parts by mass of a sum of tin oxide and phosphorus.
(6) The white conductive powder as described in any one of (1) to (5), wherein a mass ratio (SnO₂/TiO₂) of tin oxide to titanium oxide in the white conductive powder is in a range of 0.5 to 0.9.
(7) The white conductive powder as described in any one of (1) to (6), wherein a powder volume resistivity is in a range of 5×10⁴ Ω·cm or less.
(8) There is provided a conductive mixed powder including: the white conductive powder according to any one of (1) to (7); and a tin oxide powder.
(9) There is provided a dispersion liquid including: a solvent; and the white conductive powder according to any one of (1) to (7) which is dispersed in the solvent.
(10) There is provided a coating material including: the dispersion liquid according to (9); and a binder.
(11) There is provided a membrane composition including the white conductive powder according to any one of (1) to (7).

### Effects of the Disclosure

In the white conductive powder according to the aspect (1) of the present disclosure when being irradiated with ultraviolet rays, a variation in an L value in the Lab color system is small. Or, even in the case where the L value decreases when the white conductive powder is irradiated with ultraviolet rays, the L value is restored by being heated. Accordingly, a variation in whiteness during use is small, and even when the whiteness decreases, the whiteness can be restored by heating.

According to the aspect (4) of the present disclosure a white conductive powder in which whiteness, conductivity, and photocatalytic activity are required can be provided.

### BRIEF DESCRIPTION OF THE DRAWINGS

FIG. 1 is a scanning electron microscope photograph of a white conductive powder of Example 1.
FIG. 2 is a scanning electron microscope photograph of a white conductive powder of Comparative Example 1.

### BEST MODE FOR CARRYING OUT THE DISCLOSURE

Hereinafter, the present invention will be described in detail on the basis of embodiments of the present disclosure. In addition, "%" that is a unit representing a content is % by mass unless otherwise stated.

### [White Conductive Powder]

A white conductive powder of the present embodiment includes titanium oxide particles, and tin oxide particles that coat surfaces of the titanium oxide particles. An average particle size of the titanium oxide particles is in a range of 100 nm to 500 nm, and a crystal structure of the titanium oxide particles is a rutile structure. The titanium oxide particles contain K, Mg, Nb, and Zr, and each thereof is contained at a content of 0.01% by mass to 0.5% by mass. An average particle size of the tin oxide particles is in a range of 1 nm to 50 nm.

The titanium oxide particles have high whiteness. In addition, when the white conductive powder is used to form a coating film or the like, the titanium oxide particles are excellent in hiding properties. The average particle size of the titanium oxide particles is in a range of 100 nm to 500 nm. Here, the average particle size is a medium diameter measured by a laser diffraction and scattering method. In the case where the average particle size is less than 100 nm, there occurs a problem such as aggregation of the titanium oxide particles and/or the white conductive powder. In addition, the whiteness deteriorates. Furthermore, a relatively large amount of material (that is, tin oxide) for a conductive layer is necessary; and therefore, the cost of manufacturing increases. In the case where the average particle size is larger than 500 nm, there is a tendency that a problem such as settling and the like occurs during dispersion. Furthermore, in the case where the average particle size of the titanium oxide particles is in a range of 200 nm to 300 nm, the hiding power of the titanium oxide particles is the most excellent. Here, the hiding power represents a performance capable of hiding a coated surface with a coating film having an arbitrary thickness, and making a color of the coated surface not be recognized. In the case where the average particle size is less than 100 nm, the hiding power disappears. In addition, in the case where the average particle size is larger than 500 nm, the hiding power also disappears. From the viewpoints of the whiteness, the hiding power, the beauty (glossiness) of the coating film, and the cost, it is preferable that the average particle size of the titanium oxide particles be in a range of 200 nm to 300 nm, and more preferably in a range of 200 nm to 250 nm. In the case where a shape of the titanium oxide particles is a squamous shape, the beauty (glossiness) of the film becomes poor. Therefore, the shape of the titanium oxide particles is preferably a spherical shape, a rod shape, and the like. In addition, the average particle size is a so-called primary particle diameter. From the viewpoint of a coating state of a conductive layer (tin oxide particles), it is preferable that a secondary particle size (an average value of the secondary particle size) be in a range of 1 µm to 30 µm, more preferably in a range of 1 µm to 5 µm, and most preferably in a range of 1 µm to 2 µm. In the case where the secondary particle size of the titanium oxide particles is larger than 30 µm, there is a concern that unevenness may easily occur in a conductive layer (a layer of the tin oxide particles) that is formed on each of the surfaces of the titanium oxide particles. Here, the secondary particle size is measured by scanning electron microscope (SEM) observation or transmission electron microscope (TEM) observation.

A crystal structure of the titanium oxide particles is a rutile structure. An ideal chemical composition of the rutile structure is TiO₂, however, the titanium oxide particles are not limited to the composition as long as the titanium oxide particles have the rutile structure. Here, confirmation of the rutile structure is performed by X-ray diffraction. In the case where the crystal structure of the titanium oxide particles is the rutile structure, it is easy to cause the tin oxide particles to precipitate or be formed on the surfaces of the titanium oxide particles by a hydrolysis method. In addition, from the viewpoints of coatability of the tin oxide particles on the surfaces of the titanium oxide particles and the whiteness, it is preferable that a degree of rutile of the titanium oxide particles be in a range of 90% to 98%, more preferably in a range of 95% to 98%, and most preferably in a range of 97% to 98%. In the case where the degree of rutile is low, the hiding power of the titanium oxide particles becomes poor. In the case where the degree of rutile is high, photocatalytic activity of the white conductive powder becomes poor. In addition, in the case where the crystal structure of the titanium oxide particles is an anatase structure or a brookite structure, the hiding power of the titanium oxide particles becomes poor. Here, the degree of rutile is calculated by the following method. An X-ray diffraction pattern of the titanium oxide particles is measured, and an intensity area of a diffraction peak, which is derived from each of the rutile structure, the anatase structure, and the brookite structure, is obtained. Then, an intensity ratio of the diffraction peaks (the intensity area of the diffraction peak derived from the rutile structure / (the sum of the intensity areas of the diffraction peaks derived from the rutile structure, the anatase structure, and the brookite structure)) is calculated as the degree of rutile.

In addition, the titanium oxide particles contain of K, Mg, Nb, and Zr, and each thereof is contained at a content of 0.01% by mass to 0.5% by mass. It is preferable that the content of each of the elements be in a range of 0.01% by mass to 0.3% by mass, and more preferably in a range of 0.01% by mass to 0.2% by mass. In highly pure titanium oxide particles that do not contain K, Mg, Nb, and Zr at the above-described content, when the titanium oxide particles are irradiated with ultraviolet rays, electrons exit from the surfaces of the titanium oxide particles, and holes are generated. As a result, an L value of titanium oxide decreases. In contrast, K, Mg, Nb, and Zr are contained at the above-described content; and thereby, the holes are not likely to be generated, and it is considered that the decrease in the L value may be suppressed. In addition, in the case where K, Mg, Nb, and Zr are contained at contents which are more than the above-described content, the L value of the titanium oxide particles decreases, and the hiding power becomes poor.

The tin oxide particles give conductivity to the white conductive powder. From the viewpoints of the conductivity and the whiteness, it is preferable that a part of the tin oxide particles be reduced, and a compositional formula thereof be SnO_{1.2 to 2.0}. In addition, it is more preferable that the tin oxide particles be doped with phosphorus, fluorine, chlorine, or the like. Thereby, conductivity and the like of the tin oxide particles that are reduced can be stabilized. Particularly, it is most preferable that the tin oxide particles be doped with phosphorus. Thereby, excellent photocatalytic activity can be obtained.

From the viewpoints of the conductivity and the photocatalytic activity of the white conductive powder, it is preferable that the tin oxide particles contain phosphorus at a content of 0.1 to 10 parts by mass relative to 100 parts by mass of a sum of tin oxide and phosphorus. It is more preferable that the content of phosphorus be in a range of 1 part by mass to 10 parts by mass. Thereby, a preferred photocatalytic performance can be obtained. Here, determination of the quantities of tin oxide and phosphorus is performed by the following method. The contents of Sn and P are measured by ICP emission spectral analysis. Then, the content of tin oxide is calculated in assuming that all of Sn atoms are present as SnO₂.

In addition, it is preferable that the content of each of Al, Si, Mg, and Zn in the tin oxide particles be in a range of less than 1% by mass. In the case where the content of each of Al, Si, Mg, and Zn is 1% by mass or more, uniform coating of the tin oxide particles on the titanium oxide particles may not be performed; and thereby, satisfactory conductivity in the white conductive powder may not be obtained. Here, determination of the quantities of Sn, Al, Si, Mg, and Zn in the tin oxide particles is performed by the ICP emission spectral analysis. The contents (% by mass) of Al, Si, Mg, and Zn in the tin oxide particles are calculated in assuming that all of Sn atoms are present as SnO₂.

From the viewpoints of the conductivity, the photocatalytic performance, and the whiteness, it is preferable that a mass ratio (SnO₂/TiO₂) of tin oxide to titanium oxide in the white conductive powder be in a range of 0.5 to 0.9, and more preferably in a range of 0.60 to 0.85. In the case where the ratio of tin oxide is too small (the ratio of SnO₂/TiO₂ is less than 0.5), the conductivity and the photocatalytic activity of the white conductive powder may decrease. In the case where the ratio of tin oxide is too large (the ratio of SnO₂/TiO₂ exceeds 0.9), the L value of the white conductive powder may decrease too much. In addition, in the case where only tin oxide is included, there is no hiding power when the white conductive powder is used to form a coating film or the like. On the other hand, in the case where only titanium oxide is included, there is no conductivity, and the photocatalytic activity becomes low. Here, determination of the quantities of tin oxide and titanium oxide is performed by the following method. The contents of Sn and Ti are measured by the ICP emission spectral analysis. Then, the contents of tin oxide and titanium oxide are calculated in assuming that all of Sn atoms are present as SnO₂, and all of Ti atoms are present as TiO₂.

An absolute value of a difference (ΔL) between an L value in the Lab color system after the white conductive powder is irradiated with ultraviolet rays (UV) having an intensity of 0.25 mW/cm² at room temperature until an irradiation amount becomes 2 J/cm² (8,000 seconds) and an L value before the irradiation of the ultraviolet rays is preferably in a range of 1 or less. In this case, a variation in whiteness of the white conductive powder is small. Here, the L value of the white conductive powder is measured by using, for example, a color computer (type number: SM-7) manufactured by Suga Test Instruments Co., Ltd.

In addition, the white conductive powder is irradiated with ultraviolet rays having an intensity of 0.25 mW/cm² at room temperature until an irradiation amount becomes 2 J/cm² (8,000 seconds), and then the white conductive powder is heated at 60°C for 60 minutes. It is preferable that an absolute value of a difference (ΔL) between an L value after the treatment and an L value before the irradiation of the ultraviolet rays be in a range of 1 or less. In the case where the difference (ΔL) of the L value is in a range of 1 or less, even when the L value is lowered due to the irradiation of ultraviolet rays, the whiteness of the white conductive powder can be restored by heating.

It is preferable that acetaldehyde decomposition capability of the white conductive powder be higher than the acetaldehyde decomposition capability of titanium oxide particles which are not coated with the tin oxide particles. Here, the aldehyde decomposition capability is measured as described below.

At first, air and acetaldehyde (test air) are filled in a Tedrar bag (A) of 5 dm³ in such a manner that a concentration of acetaldehyde becomes 200 ppm. Then, it is confirmed that the concentration of acetaldehyde is 200 ppm by using a gas detecting tube. Then, the test air in the Tedrar bag (A) is transferred into an evacuated Tedrar bag (B) having a volume of 3 dm³. Separately, 5 g of the white conductive powder is uniformly filled in a petri dish having a diameter of 100 mm and a height of 10 mm. This petri dish is put into the Tedrar bag (A), and the Tedrar bag (A) is hermetically sealed and is evacuated. Next, the test air in the Tedrar bag (B) is transferred into the Tedrar bag (A). The Tedrar bag (A) is put in an ultraviolet irradiation apparatus, and the Tedrar bag (A) is irradiated with ultraviolet rays in a blackout curtain with an ultraviolet ray intensity of 1 mW/cm² for one hour. After the irradiation, an aldehyde concentration in the Tedrar bag (A) is measured by a gas detecting tube.

It is preferable that a powder volume resistivity of the white conductive powder be in a range of 5×10⁴ Ω·cm or less, and more preferably in a range of 5×10³ Ω·cm or less. In an assumed use of the white conductive powder of the present embodiment, it is preferable that the powder volume resistivity be in a range of 1 Ω·cm or more so as to obtain a surface resistivity of 10⁶ to 10¹² Ω/square (Q/sq). Here, the powder volume resistivity is measured by the following method. A sample powder is put into a pressure container, and is compressed at 10 MPa to prepare a compact body. Then, a resistivity of the compact body is measured by a digital multi-meter.

An average particle size of the white conductive powder depends on an average particle size of the titanium oxide particles and a coating amount of the tin oxide particles. The average particle size of the white conductive powder is not particularly limited; however, from the viewpoints of the hiding power and the conductivity, it is preferable that the average particle size of the white conductive powder be in a range of 110 nm to 1,000 nm, more preferably in a range of 500 nm to 1,000 nm, and most preferably in a range of 600 to 900 nm. It is preferable that a shape of the white conductive powder be a granular shape or a rod shape.

In the white conductive powder of the present embodiment, since a tin oxide layer (tin oxide particles) does not contain antimony and indium, there is no concern about occurrence of environmental pollution. In addition, since antimony and indium are not contained, the white conductive powder can be produced at low cost. In addition, in the present embodiment, the meaning of "antimony and indium are not contained" represents that the white conductive powder is produced without using antimony and indium, and these elements are not detected by a standard analysis apparatus in which a detection limit is 500 ppm.

The white conductive powder of the present embodiment has high conductivity without containing a doping component such as antimony. In addition, since the white conductive powder has appropriate conductivity, satisfactory whiteness, and photocatalytic activity, the white conductive powder can be widely used as a safe conductive material.

### [Conductive Mixed Powder]

The conductive mixed powder of the present embodiment includes the white conductive powder of the above-described present embodiment, and a tin oxide powder. Here, it is preferable that the tin oxide powder be formed from phosphorus-doped tin oxide or tin oxide. It is preferable that an average particle size of the tin oxide powder be in a range of 5 nm to 100 nm, and more preferably in a range of 10 nm to 30 nm. In the case where the average particle size of the tin oxide powder exceeds 100 nm, the hiding power of a film decreases. In the case where the average particle size of the tin oxide powder is less than 5 nm, an effect of conductivity decreases. In addition, since particles become fine, there is a problem in that film strength decreases. In addition, similarly to titanium oxide, in the case where a shape of the tin oxide powder is a squamous shape, the beauty (glossiness) of the film becomes poor. Therefore, it is preferable that the shape of the tin oxide powder be a rod shape, a spherical shape, and the like. In the case where the tin oxide powder is formed from phosphorus-doped tin oxide, from the viewpoint of conductivity, it is preferable that the content of phosphorus be in a range of 0.1 to 10 parts by mass, and more preferably in a range of 1 part by mass to 10 parts by mass relative to 100 parts by mass of phosphorus-doped tin oxide.

From the viewpoints of conductivity and white hiding power, it is preferable that the conductive mixed powder contain the tin oxide powder at a content of 0.01 to 30 parts by mass relative to 100 parts by mass of the conductive mixed powder. More preferably, the content of the tin oxide powder is in a range of 0.01 to 20 parts by mass.

### [Method for Producing White Conductive Powder]

An example of the method for producing the white conductive powder of the present embodiment will be described. For example, a tin hydroxide compound is caused to precipitate on surfaces of titanium oxide particles by a hydrolysis method. Then, the titanium oxide particles on which the tin hydroxide compound precipitates are dried, and are calcined in an inert gas atmosphere. According to this, the white conductive powder can be produced.

Details of the producing method will be described below. Titanium oxide particles containing K, Mg, Nb, and Zr, in which each thereof is contained at a content of 0.01% by mass to 0.5% by mass, are added to water to obtain a slurry. At this time, sodium silicate, sodium hexametaphosphate, and the like may be added as a dispersing agent. A dispersing degree of dispersing the titanium oxide particles may be adjusted by dispersion strength of a disperser, and a dispersion time. For evaluation of the dispersing degree (degree of dispersion), an average particle size ratio of titanium dioxide (titanium oxide) particles in a slurry between before the dispersion and after the dispersion may be used. It is preferable that a ratio of [(average particle size after the dispersion) / (average particle size before the dispersion)] be in a range of 0.6 to 0.95, and more preferably in a range of 0.7 to 0.95. According to this, satisfactory conductivity and excellent whiteness can be compatible with each other. In the case where the ratio of [(average particle size after the dispersion) / (average particle size before the dispersion)] is small, improvement in whiteness can be obtained, but conductivity decreases. In the case where the ratio of [(average particle size after the dispersion) / (average particle size before the dispersion)] is smaller than 0.6, whiteness is improved, but conductivity becomes poor. On the other hand, in the case where the ratio of [(average particle size after the dispersion) / (average particle size before the dispersion)] exceeds 0.95, conductivity becomes excellent, but whiteness becomes poor. Here, the ratio of [(average particle size after the dispersion) / (average particle size before the dispersion)] is measured by the following method. Average particle sizes of titanium oxide particles in a slurry before the dispersion and after the dispersion are measured by a dynamic light scattering type particle size distribution measuring apparatus (type number: LB-550) manufactured by HORIBA, Ltd. Then, a ratio of the average particle sizes that are obtained is calculated.

Next, tin hydroxide is coated on the titanium oxide particles that are dispersed. Examples of a raw material of tin hydroxide include inorganic acid salts of tin (stannous salt and stannic salt), and the like, and examples of the inorganic acid salts of tin include: tin halides such as tin chloride; tin oxide; tin hydroxide; tin sulfate; tin nitrate; and the like. One kind of these may be used alone, or two or more kinds thereof may be used in combination. Examples of the stannous salt include: inorganic salts such as stannous fluoride, stannous chloride, stannous borofluoride, stannous sulfate, stannous oxide, stannous nitrate, tin pyrophosphate, tin sulfamate, and stannous acid salt (stannite); organic salts such as stannous alkanol sulfate, stannous sulfosuccinate, stannous salt of aliphatic carboxylic acid; and the like. Examples of the stannic salts include stannic salts of the respective stannous salts, however, these include gaseous salts, poorly soluble salts, and the like. Therefore, as a raw material of the tin hydroxide compound, stannic chloride or stannous chloride that is a liquid is generally used. Particularly, it is industrially preferable to use an aqueous hydrochloric acid solution of stannic chloride or stannous chloride. The tin hydroxide compound may be obtained by hydrolyzing the raw material, and this method may be a method known to a person having ordinary skill in the art. Specifically, an aqueous tin chloride solution and an aqueous alkali solution are mixed, and the resultant mixture is hydrolyzed; and thereby, the tin hydroxide compound is obtained. Therefore, tin hydroxide is coated on titanium oxide particles by the following method. While a slurry of titanium oxide particles obtained by a dispersion treatment is stirred, a solution of a compound that is a raw material of a hydroxide and an alkali solution are dripped to the slurry for hydrolysis. According to this, the tin hydroxide precipitates on surfaces of the titanium oxide particles and is coated thereon. It is preferable that a reaction temperature be in a range of 50°C to 100°C, and more preferably in a range of 70°C to 98°C. In the case where the reaction temperature is lower than 50°C, the tin hydroxide that precipitates becomes fine; and thereby, satisfactory conductivity may not be obtained.

As the solution (solvent), a solvent capable of dissolving the stannic salt or the stannous salt may be used, and examples thereof include water, alcohol, and the like. Examples of the alcohol include methanol, ethanol, and the like. In addition, in the case of using water as the solution, it is preferable to cause the hydrolysis to occur by adding alkali after the stannic salt or the stannous salt is dissolved and before the stannic salt or the stannous salt spontaneously starts to be hydrolyzed.

Next the titanium oxide particles coated with tin hydroxide is subjected to a common treatment such as washing, drying, pulverization, and the like.

After the above-described treatment, calcining is performed in an inert gas atmosphere such as an argon gas, a nitrogen gas, and the like. It is preferable that a calcining temperature be in a range of 300°C to 800°C, and more preferably in a range of 400°C to 700°C. In the case where the calcining temperature is 300°C or higher, stannic oxide is generated, and oxygen defects can be formed in the stannic oxide. In the case where the calcining temperature is 800°C or lower, intended conductivity can be obtained. In addition, it is preferable that a heat treatment (calcining) time be in a range of 10 minutes to 8 hours, and more preferably in a range of 20 minutes to 6 hours. However, the heat treatment time is appropriately changed depending on a calcining furnace.

From the viewpoints of the conductivity, stability of the conductivity, and photocatalytic activity, it is preferable that the tin oxide particles contain phosphorus. As a method of causing a tin hydroxide compound to contain phosphorus, for example, the following methods may be exemplified. (1) A method of using a phosphorus-containing compound as a raw material of the tin hydroxide compound. (2) A method of forming the phosphorus-containing tin hydroxide by dissolving a raw material of phosphorus in a solution containing a raw material of tin hydroxide in advance. (3) A method of allowing phosphorus to be contained in a tin hydroxide film by adding the raw material of phosphorus after forming the tin hydroxide film. In order to form a tin hydroxide coating more uniformly, the method (2) is more preferable. In addition, it is also possible to apply a method in which the raw material of phosphorus is sprayed before the calcining, and phosphorus is allowed to be diffused in tin oxide during calcining.

As the raw material of phosphorus, for example, orthophosphoric acid, metaphosphoric acid, pyrophosphoric acid, tripolyphosphoric acid, phosphorous acid, hypophosphorous acid, the ammonium salts thereof, sodium salts thereof, potassium salts thereof, and the like may be used.

It is preferable to adjust an added amount of phosphorus so that the tin oxide particles contain phosphorus at a content of 0.1 to 10 parts by mass relative to 100 parts by mass of a sum of tin oxide and phosphorus. It is more preferable that the content of phosphorus be in a range of 0.5 to 5 parts by mass. In the case where the content of phosphorus is too less, desired conductivity and photocatalytic activity may not be obtained. In the case where the content of phosphorus is too much, crystallinity of tin oxide deteriorates, and thereby, desired conductivity may not be obtained. In the case where phosphorus is added at a content satisfying the above-described conditions, a powder volume resistivity may be lowered to a value 1/10 to 1/20 times of that in the case in which phosphorus is not added.

### [Dispersion Liquid]

The dispersion liquid of the present embodiment contains a solvent, and the white conductive powder of the present embodiment which is dispersed in the solvent. Examples of the solvent include water, ethanol, methanol, isopropyl alcohol, toluene, methyl ethyl ketone, propylene glycol monomethyl ether, and the like.

A concentration of a solid content of the dispersion liquid is in a range of 1% to 70%, and preferably in a range of 10% to 50%, based on mass standard. A pH of the dispersion liquid is in a range of 4 to 12, and preferably in a range of 5 to 10. Here, the white conductive powder, an inorganic dispersing agent, and an organic dispersing agent are contained in the solid content.

### [Coating Material]

The coating material of the present embodiment contains the dispersion liquid and a binder. In the case where the coating material is produced by mixing the dispersion liquid with the binder, dispersion energy during production of the coating material can be reduced. In addition, energy related to dewatering or drying in a process of producing the white conductive powder can be reduced. Here, examples of the binder include a resin, silica sol-gel, soda glass, and the like. The resin, the silica sol-gel, and the soda glass can be used alone, however, the silica sol-gel and the soda glass may be used together with the resin. In the case where the silica sol-gel or the soda glass is contained, a packing (filling) effect of the white conductive powder is increased. Accordingly, when using the coating material in a substrate, a filling effect of the white conductive powder on the substrate can be increased, and thereby, satisfactory conductivity is obtained. In addition, the silica sol-gel or the soda glass is excellent in heat resistance. Accordingly, when a membrane composition formed using the coating material is subjected to a heating treatment in a process for making a device or the like, modification due to heat can be prevented. Examples of the resin include a polyvinyl alcohol resin, a vinyl chloride-vinyl acetate resin, an acrylic resin, an epoxy resin, an urethane resin, an alkid resin, a polyester resin, an ethylene-vinyl acetate copolymer, an acryl-styrene copolymer, a cellulose resin, a phenol resin, an amino resin, fluorine resin, a silicone resin, a petroleum resin, shellac, a rosin derivative, and natural resins such as a rubber derivative.

A mixing amount of the white conductive powder is in a range of 20 to 400 parts by mass, and preferably in a range of 100 parts by mass to 300 parts by mass relative to 100 parts by mass of resin.

### [Membrane Composition]

The membrane composition of the present embodiment contains the white conductive powder of the above-described present embodiment.

In the case where the coating material of the above-described present embodiment is used for a use in which conductivity is required, for example, the coating material is applied to an insulating base material such as a plastic molded body, paper, and a polymeric film. According to this, a conductive membrane composition which is excellent in surface flatness or adhesiveness can be formed on a surface of the base material.

The white conductive powder of the above-described present embodiment can be widely used as a safe conductive material. Specifically, for example, the white conductive powder is appropriately used as a conductive material in uses such as conductive paper, antistatic cloth, a conductive thread, an antistatic coating material, an antistatic wall, an antistatic roller, and the like.

### EXAMPLES

Hereinafter, the invention will be described in detail referring to examples, but the invention is not limited thereto.

### [Example 1]

A titanium dioxide powder was prepared in which an average particle size was 210 nm, a crystal structure was a rutile structure, a degree of rutile was 97%, the content of Mg was 0.06%, the content of K was 0.07%, the content of Zr was 0.02%, and the content of Nb was 0.10%. The titanium dioxide powder (100 g) was added to water (400 g), and the resultant mixture was subjected to a dispersion treatment by a bead mill, whereby a slurry was prepared. An average particle size ratio of the titanium dioxide between before the dispersion and after the dispersion, that is, a ratio of an average particle size after the dispersion / an average particle size before the dispersion was 0.84. The contents of Mg, K, Zr, and Nb in the titanium dioxide powder, the average particle size, the degree of rutile, and the average particle size ratio of titanium dioxide between before the dispersion and after the dispersion are shown in Table 1. In addition, conditions of preparing the white conductive powder are also shown in Table 1.

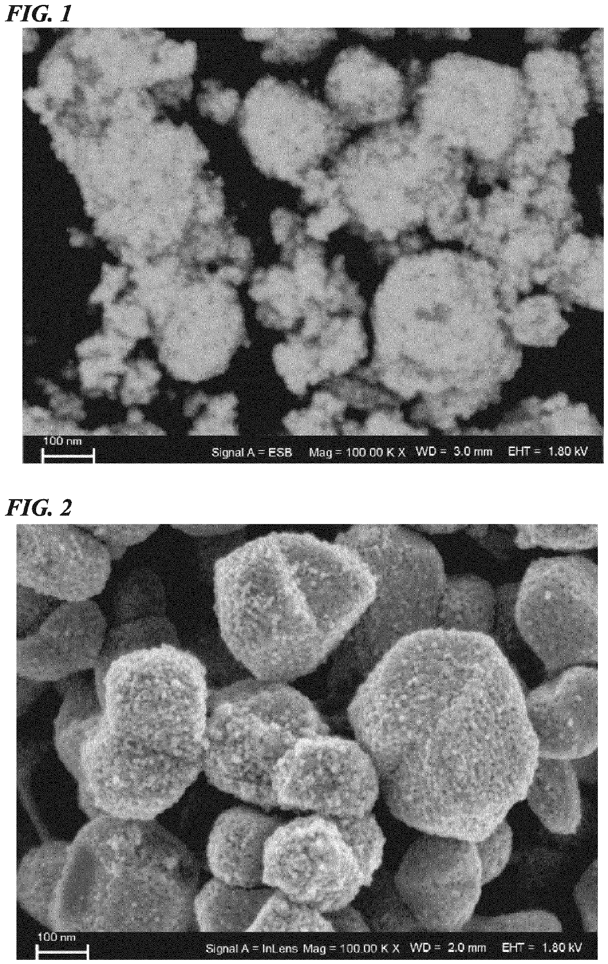

A mixed liquid of SnCl₄ (142 g) and H₃PO₄ (5.9 g) and an aqueous caustic soda solution were dripped to the slurry at the same time to carry out a neutralization reaction while maintaining a pH to approximately 1, and maintaining a temperature in a range of 90°C to 100°C. After the reaction, a crystalline product that was obtained was washed to remove by-product salts and metallic impurities from the crystalline product, and then was dried at 110°C. The powder after the drying was calcined at 650°C in a mixed gas atmosphere containing 0.04% of NH₃ and 99.96% of N₂. The calcined product was pulverized using a hammer mill, whereby a white conductive powder was obtained. An average particle size of tin oxide particles was measured using a SEM. Results thereof are shown in Table 2. FIG. 1 shows a SEM photograph of the white conductive powder of Example 1. In addition, a mass ratio SnO₂/TiO₂ was approximately 0.82, and a content of phosphorus was approximately 2.2 parts by mass relative to 100 parts by mass of a sum of tin oxide and phosphorus.

A powder volume resistivity of the obtained white conductive powder during pressurization at 10 MPa was measured by a digital multi-meter (DM-7561; manufactured by Yokogawa Electric Corporation). The powder volume resistivity was 1.2×10² Ω·cm. An L value was measured by a color computer (type number: SM-7) manufactured by Suga Test Instruments Co., Ltd. The L value was 84.5. These results are shown in Table 2.

10 g of the white conductive powder was uniformly filled in a petri dish. Then, the white conductive powder was irradiated with ultraviolet rays having an intensity of 0.25 mW/cm² at room temperature until an irradiation amount became 2 J/cm² (8,000 seconds) using an ultraviolet (UV) irradiation apparatus. The L value was measured again after the UV irradiation. The L value was 84.5, and a difference between the L value after the UV irradiation and the L value before the UV irradiation (ΔL: [(L value after the UV irradiation) - (L value before the UV irradiation)]) was 0. Next, the UV-irradiated powder was heated in an atmospheric atmosphere at 60°C for one hour. The L value after the heating was measured, and the measured value was 85.0. The difference between the L value after the heating at 60°C and the L value before the UV irradiation (ΔL₆₀: [(L value after the UV irradiation and the heating at 60°C) - (L value before the UV irradiation)]) was 0.5. These results are shown in Table 2.

In addition, acetaldehyde decomposition capability was measured to evaluate photocatalytic activity characteristics of the obtained white conductive powder. First, air and acetaldehyde (test air) were filled in a Tedrar bag (A) of 5 dm³ in such a manner that a concentration of acetaldehyde became 200 ppm. Then, it was confirmed that the concentration of acetaldehyde was 200 ppm with a gas detecting tube. Then, the test air in the Tedrar bag (A) was transferred into an evacuated Tedrar bag (B) of 3 dm³. Separately, 5 g of the white conductive powder was uniformly filled in a petri dish having a diameter of 100 mm and a height of 10 mm. The petri dish was put into the Tedrar bag (A), and the Tedrar bag (A) was hermetically sealed and was evacuated. Next, the test air in the Tedrar bag (B) was transferred into the Tedrar bag (A). The Tedrar bag (A) was set in an ultraviolet (UV) irradiation apparatus, and the Tedrar bag (A) was irradiated with ultraviolet rays having an ultraviolet ray intensity of 1 mW/cm² for one hour in a blackout curtain. After the irradiation, an aldehyde concentration in the Tedrar bag (A) was measured by a gas detecting tube. The aldehyde concentration was 10 ppm. The acetaldehyde concentration after the irradiation of ultraviolet rays and a reduced amount of the acetaldehyde due to the irradiation of ultraviolet rays are shown in Table 2.

### [Example 2]

A white conductive powder was obtained in the same manner as Example 1 except that the calcining was performed with only TiO₂ particles as a raw material and N₂ gas. Results are shown in Tables 1 and 2.

### [Example 3]

A white conductive powder was obtained in the same manner as Example 2 except that a slurry was prepared by dispersing titanium dioxide so that the average particle size ratio of TiO₂ between before the dispersion and after the dispersion, that is, a ratio of an average particle size after the dispersion / an average particle size before the dispersion became 0.75. Results are shown in Tables 1 and 2.

### [Example 4]

A white conductive powder was obtained in the same manner as Example 2 except that the calcining temperature was set to 675°C. Results are shown in Tables 1 and 2.

### [Example 5]

A white conductive powder was obtained in the same manner as Example 2 except that the calcining temperature was set to 700°C. Results are shown in Tables 1 and 2.

### [Example 6]

A mixed liquid of SnCl₄ (142 g) and H₃PO₄ (5.9 g) and an aqueous caustic soda solution were dripped to water (400 g) at the same time to carry out a neutralization reaction while maintaining a pH to approximately 1, and maintaining a temperature in a range of 90°C to 100°C. After the reaction, a crystalline product that was obtained was washed to remove by-product salts and metallic impurities from the crystalline product, and then was dried at 110°C. A powder after the drying was calcined at 650°C in a N₂ gas atmosphere, and then the resultant calcined product was pulverized using a hammer mill, whereby a light gray conductive powder was obtained. 20 parts by mass of the obtained light gray conductive powder was added to 100 parts by mass of the white conductive powder obtained in Example 2, and the resultant mixture was uniformly mixed, whereby a mixed powder (conductive mixed powder) of the white conductive powder and the tin oxide powder was obtained. Results are shown in Tables 3 and 4. In addition, in Table 4, a powder volume resistivity of Example 6 represents a value of the conductive mixed powder.

### [Example 7]

A white conductive powder was obtained in the same manner as Example 1 except that a mixed liquid of of SnCl₄ (94 g) and H₃PO₄ (3.9 g) was used. Results are shown in Tables 3 and 4. In addition, a ratio of SnO₂/TiO₂ was approximately 0.54, and the content of phosphorus was approximately 2.2 parts by mass relative to 100 parts by mass of a sum of tin oxide and phosphorus.

### [Example 8]

A white conductive powder was obtained in the same manner as Example 1 except that a mixed liquid of of SnCl₄ (142 g) and H₃PO₄ (0.6 g) was used. Results are shown in Tables 3 and 4. In addition, a ratio of SnO₂/TiO₂ was approximately 0.82, and the content of phosphorus was approximately 0.23 parts by mass relative to 100 parts by mass of a sum of tin oxide and phosphorus.

### [Example 9]

A white conductive powder was obtained in the same manner as Example 1 except that a mixed liquid of of SnCl₄ (142 g) and H₃PO₄ (23.6 g) was used. Results are shown in Tables 3 and 4. In addition, a ratio of SnO₂/TiO₂ was approximately 0.82, and the content of phosphorus was approximately 8.3 parts by mass relative to 100 parts by mass of a sum of tin oxide and phosphorus.

### [Comparative Example 1]

A titanium dioxide powder was prepared in which an average particle size was 250 nm, a crystal structure was a rutile structure, a degree of rutile was 99%, the content of Mg was less than 1 ppm, the content of K was less than 1 ppm, the content of Zr was 1 ppm, and the content of Nb was 4 ppm. The titanium dioxide (100 g) was added to water (400 g), and the resultant mixture was stirred, whereby a slurry was prepared. A mixed liquid of SnCl₄ (40 g) and SbCl₃ (4.6 g) and an aqueous caustic soda solution were dripped to the slurry at the same time to carry out a neutralization reaction while maintaining a pH to approximately 1, and maintaining a temperature in a range of 90°C to 100°C. After the reaction, a crystalline product that was obtained was washed to remove by-product salts and metallic impurities from the crystalline product, and then was dried at 110°C. The powder after the drying was calcined at 630°C in an atmospheric atmosphere. Then, the calcined product was pulverized to obtain a white conductive powder. Results are shown in Tables 3 and 4. FIG. 2 shows a SEM photograph of the white conductive powder of Comparative Example 1.

### [Comparative Example 2]

A titanium dioxide powder was prepared in which an average particle size was 250 nm, a crystal structure was a rutile structure, a degree of rutile was 99%, the content of Mg was less than 1 ppm, the content of K was less than 1 ppm, the content of Zr was 1 ppm, and the content of Nb was 4 ppm. The titanium dioxide (100 g) was added to water (400 g), and the resultant mixture was stirred, whereby a slurry was prepared. SnCl₄ (44 g) and and an aqueous caustic soda solution were dripped to the slurry at the same time to carry out a neutralization reaction while maintaining a pH to approximately 1, and maintaining a temperature in a range of 90°C to 100°C. After the reaction, a crystalline product that was obtained was washed to remove by-product salts and metallic impurities from the crystalline product, and then was dried at 110°C. The powder after the drying was calcined at 600°C in a N₂ gas atmosphere. Then, the calcined product was pulverized to obtain a white conductive powder. Results are shown in Tables 5 and 6.

### [Comparative Example 3]

A titanium dioxide powder was prepared in which an average particle size was 250 nm, a crystal structure was a rutile structure, a degree of rutile was 99%, the content of Mg was less than 1 ppm, the content of K was less than 1 ppm, the content of Zr was 1 ppm, and the content of Nb was 4 ppm. A powder volume resistivity and the like of the titanium dioxide were measured. Results are shown in Tables 5 and 6.

### [Comparative Example 4]

A titanium dioxide powder was prepared in which an average particle size was 210 nm, a crystal structure was a rutile structure, a degree of rutile was 97%, the content of Mg was 0.06%, the content of K was 0.07%, the content of Zr was 0.02%, and the content of Nb was 0.10%. A powder volume resistivity and the like of the titanium dioxide were measured. Results are shown in Tables 5 and 6.

### [Comparative Example 5]

A mixed liquid of SnCl₄ (142 g) and H₃PO₄ (5.9 g) and an aqueous caustic soda solution were dripped to water (400 g) at the same time to carry out a neutralization reaction while maintaining a pH to approximately 1, and maintaining a temperature in a range of 90°C to 100°C. After the reaction, a crystalline product that was obtained was washed to remove by-product salts and metallic impurities from the crystalline product, and then was dried at 110°C. A powder after the drying was calcined at 650°C in a N₂ gas atmosphere. Then, the resultant calcined product was pulverized using a hammer mill, whereby a light gray conductive powder was obtained. Results are shown in Tables 5 and 6.

### [Reference Example 1]

A mixed liquid of SnCl₄ (142 g) and H₃PO₄ (5.9 g) and an aqueous caustic soda solution were dripped to water (400 g) at the same time to carry out a neutralization reaction while maintaining a pH to approximately 1, and maintaining a temperature in a range of 90°C to 100°C. After the reaction, a crystalline product that was obtained was washed to remove by-product salts and metallic impurities from the crystalline product, and then was dried at 110°C. A powder after the drying was calcined at 650°C in a N₂ gas atmosphere. Then, the resultant calcined product was pulverized using a hammer mill, whereby a light gray conductive powder was obtained. 40 parts by mass of the obtained light gray conductive powder was added to 100 parts by mass of the white conductive powder obtained in Example 2, and the resultant mixture was uniformly mixed, whereby a mixed powder (conductive mixed powder) of the white conductive powder and the tin oxide powder was obtained. Results are shown in Tables 5 and 6. In addition, in Tables 6, a powder volume resistivity represents a value of the conductive mixed powder.

**Table 1**

| | | Example 1 | Example 2 | Example 3 | Example 4 | Example 5 |
|---|---|---|---|---|---|---|
| TiO₂ particles of raw material | Average particle size | 210 nm | 210 nm | 210 nm | 210 nm | 210 nm |
| | Degree of rutile | 97% | 97% | 97% | 97% | 97% |
| | Content of Mg | 0.06% | 0.07% | 0.07% | 0.07% | 0.07% |
| | Content of K | 0.07% | 0.08% | 0.08% | 0.08% | 0.08% |
| | Content of Nb | 0.10% | 0.12% | 0.12% | 0.12% | 0.12% |
| | Content of Zr | 0.02% | 0.04% | 0.04% | 0.04% | 0.04% |
| A ratio of average particle size of TiO₂ after dispersion / average particle size of TiO₂ before dispersion | | 0.84 | 0.84 | 0.75 | 0.84 | 0.84 |
| Components in slurry | TiO₂ | 100 g | 100 g | 100 g | 100 g | 100 g |
| | SnCl₄ | 142 g | 142 g | 142 g | 142 g | 142 g |
| | H₃PO₄ | 5.9 g | 5.9 g | 5.9 g | 5.9 g | 5.9 g |
| | SbCl₃ | 0 g | 0 g | 0 g | 0 g | 0 g |
| | SnO₂/TiO₂ | 0.82 | 0.82 | 0.82 | 0.82 | 0.82 |
| | Content of phosphorus | 2.2 parts by mass | 2.2 parts by mass | 2.2 parts by mass | 2.2 parts by mass | 2.2 parts by mass |
| Calcining conditions | Calcining temperature | 650°C | 650°C | 650°C | 675°C | 700°C |
| | Calcining gas | NH₃ : 0.04%, N₂: 99.96% | N₂ : 100% | N₂ : 100% | N₂ : 100% | N₂ : 100% |

**Table 2**

| | | Example 1 | Example 2 | Example 3 | Example 4 | Example 5 |
|---|---|---|---|---|---|---|
| Average particle size of tin oxide particles | | 10 nm | 10 nm | 10 nm | 10 nm | 10 nm |
| Powder volume resistivity (Qcm) of white conductive powder | | 1.2×10² | 3.7×10³ | 3.9×10³ | 3.7×10² | 1.5×10² |
| Mixed amount of mixed tin oxide powder (tin oxide powder / white conductive powder) | | 0.0 | 0.0 | 0.0 | 0.0 | 0.0 |
| Average particle size of mixed tin oxide powder | | - | - | - | - | - |
| Evaluation of L value of white conductive powder | L value before UV irradiation | 84.5 | 90.2 | 90.9 | 88.9 | 89.2 |
| | L value after UV irradiation | 84.5 | 88.9 | 90.7 | 88.5 | 89.5 |
| | ΔL ((L value after UV irradiation) - (L value before UV irradiation)) | 0.0 | -1.3 | -0.2 | -0.4 | -0.7 |
| | L value after UV irradiation and heating at 60°C for 1 hour | 85.0 | 89.9 | 91.4 | 88.8 | 89.7 |
| | ΔL₆₀ ((L value after UV irradiation and heating at 60°C) - (L value before UV irradiation)) | 0.5 | -0.3 | 0.5 | -0.1 | 0.5 |
| Acetaldehyde Decomposition capability | Acetaldehyde after UV irradiation | 10 ppm | 5 ppm | 10 ppm | 20 ppm | 30 ppm |
| | Reduced amount | 190 ppm | 195 ppm | 190 ppm | 180 ppm | 170 ppm |

**Table 3**

| | | Example 6 | Example 7 | Example 8 | Example 9 | Comparative Example 1 |
|---|---|---|---|---|---|---|
| TiO₂ particles of raw material | Average particle size | 210 nm | 210 nm | 210 nm | 210 nm | 250 nm |
| | Degree of rutile | 97% | 97% | 97% | 97% | 99% |
| | Content of Mg | 0.07% | 0.06% | 0.06% | 0.06% | less than 1 ppm |
| | Content of K | 0.08% | 0.07% | 0.07% | 0.07% | less than 1 ppm |
| | Content of Nb | 0.12% | 0.10% | 0.10% | 0.10% | 4 ppm |
| | Content of Zr | 0.04% | 0.02% | 0.02% | 0.02% | 1 ppm |
| A ratio of average particle size of TiO₂ after dispersion / average particle size of TiO₂ before dispersion | | 0.84 | 0.84 | 0.84 | 0.84 | - |
| Components in slurry | TiO₂ | 100 g | 100 g | 100 g | 100 g | 100 g |
| | SnCl₄ | 142 g | 94 g | 142 g | 142 g | 40 g |
| | H₃PO₄ | 5.9 g | 3.9 g | 0.6 g | 23.6 g | 0 g |
| | SbCl₃ | 0 g | 0 g | 0 g | 0 g | 4.6 g |
| | SnO₂/TiO₂ | 0.82 | 0.54 | 0.82 | 0.82 | 0.23 |
| | Content of phosphorus | 2.2 parts by mass | 2.2 parts by mass | 0.23 parts by mass | 8.3 parts by mass | 0.0 part by mass |
| Calcining conditions | Calcining temperature | 650°C | 650°C | 650°C | 650°C | 630°C |
| | Calcining gas | N₂ : 100% | NH₃ : 0.04%, N₂ : 99.96% | NH₃ : 0.04%, N₂ : 99.96% | NH₃ : 0.04%, N₂ : 99.96% | Air |

**Table 4**

| | | Example 6 | Example 7 | Example 8 | Example 9 | Comparative Example 1 |
|---|---|---|---|---|---|---|
| Average particle size of tin oxide particles | | 10 nm | 10 nm | 10 nm | 10 nm | 12 nm |
| Powder volume resistivity (Ωcm) of white conductive powder or conductive mixed powder | | 8.7×10² | 1.3×10⁴ | 1.5×10² | 5.6×10³ | 3 |
| Mixed amount of mixed tin oxide powder (tin oxide powder / white conductive powder) | | 0.2 | 0.0 | 0.0 | 0.0 | 0.0 |
| Average particle size of mixed tin oxide powder | | 10 nm | - | - | - | - |
| Evaluation of L value of white conductive powder | L value before UV irradiation | 80.9 | 87.7 | 84.1 | 86.2 | 81.3 |
| | L value after UV irradiation | 80.2 | 87.7 | 83.6 | 86.0 | 78.1 |
| | ΔL ((L value after UV irradiation) - (L value before UV irradiation)) | -0.7 | 0.0 | -0.5 | -0.2 | -3.2 |
| | L value after UV irradiation and heating at 60°C for 1 hour | 80.5 | 87.3 | 84.8 | 86.5 | 77.7 |
| | ΔL₆₀ ((L value after UV irradiation and heating at 60°C) - (L value before UV irradiation)) | -0.4 | -0.4 | 0.7 | 0.3 | -3.6 |
| Acetaldehyde Decomposition capability | Acetaldehyde after UV irradiation | 10 ppm | 10 ppm | 20 ppm | 10 ppm | 30 ppm |
| | Reduced amount | 190 ppm | 190 ppm | 180 ppm | 190 ppm | 170 ppm |

**Table 5**

| | | Comparative Example 2 | Comparative Example 3 | Comparative Example 4 | Comparative Example 5 | Reference Example 1 |
|---|---|---|---|---|---|---|
| TiO₂ particles of raw material | Average particle size | 250 nm | 250 nm | 210 nm | - | 210 nm |
| | Degree of rutile | 99% | 99% | 97% | - | 97% |
| | Content of Mg | less than 1 ppm | less than 1 ppm | 0.06% | - | 0.07% |
| | Content of K | less than 1 ppm | less than 1 ppm | 0.07% | - | 0.08% |
| | Content of Nb | 4 ppm | 4 ppm | 0.10% | - | 0.12% |
| | Content of Zr | 1 ppm | 1 ppm | 0.02% | - | 0.04% |
| A ratio of average particle size of TiO₂ after dispersion / average particle size of TiO₂ before dispersion | | - | - | - | - | 0.84 |
| Components in slurry | TiO₂ | 100 g | - | - | - | 100 g |
| | SnCl₄ | 44 g | - | - | 142 g | 142 g |
| | H₃PO₄ | 0 g | - | - | 5.9 g | 5.9 g |
| | SbCl₃ | 0 g | - | - | - | 0 g |
| | SnO₂/TiO₂ | 0.25 | - | - | - | 0.82 |
| | Content of phosphorus | 0.0 part by mass | 0.0 part by mass | 0.0 part by mass | 2.2 parts by mass | 2.2 parts by mass |
| Calcining conditions | Calcining temperature | 600°C | - | - | 650°C | 650°C |
| | Calcining gas | N₂ : 100% | - | - | N₂ : 100% | N₂ : 100% |

**Table 6**

| | | Comparative Example 2 | Comparative Example 3 | Comparative Example 4 | Comparative Example 5 | Reference Example 1 |
|---|---|---|---|---|---|---|
| Average particle size of tin oxide particles | | 18 nm | - | - | 10 nm | 10 nm |
| Powder volume resistivity (Ωcm) of white conductive powder or conductive mixed powder | | 2.5×10² | 1.3×10⁸ | 1.2×10⁸ | 1.0×10² | 5.3×10² |
| Mixed amount of mixed tin oxide powder (tin oxide powder / white conductive powder) | | 0.0 | 0.0 | 0.0 | 0.0 | 0.4 |
| Average particle size of mixed tin oxide powder | | - | - | - | - | 10 nm |
| Evaluation of L value of white conductive powder | L value before UV irradiation | 89.2 | 94.1 | 92.7 | 62.0 | 72.8 |
| | L value after UV irradiation | 85.7 | 91.7 | 93.4 | - | 72.6 |
| | ΔL ((L value after UV irradiation) - (L value before UV irradiation)) | -3.5 | -2.4 | 0.7 | - | -0.2 |
| | L value after UV irradiation and heating at 60°C for 1 hour | 85.6 | 93.0 | 92.7 | - | 72.8 |
| | ΔL₆₀ ((L value after UV irradiation and heating at 60°C) - (L value before UV irradiation)) | -3.6 | -1.1 | -0.1 | - | 0.0 |
| Acetaldehyde Decomposition capability | Acetaldehyde after UV irradiation | 20 ppm | 50 ppm | 120 ppm | - | 5 ppm |
| | Reduced amount | 180 ppm | 150 ppm | 80 ppm | - | 195 ppm |

As is clear from Tables 1 to 6, in Examples 1 to 5 and 7 to 9 in which the titanium oxide particles defined in the present embodiment were coated with the tin oxide particles defined in the present embodiment, the powder volume resistivities were low, and the acetaldehyde decomposition capabilities were high (the photocatalytic activities were excellent). In addition, in Examples 1 and 7, ΔL was 0, and the photocatalytic activities (acetaldehyde decomposition capabilities) were excellent. In oxidization of acetaldehyde, the L value decreases along with photo-excitation. However, in Examples 1 and 7, even though a decrease in L value due to UV irradiation did not occur, excellent photocatalytic activities were obtained. In Example 2, the absolute value of ΔL before and after the UV irradiation exceeded 1. However, the absolute value of ΔL₆₀ was in a range of 1 or less, and the L value was restored due to heating. In addition, the photocatalytic activity was excellent. In all of Examples 3 to 5, 8 and 9, the absolute values of ΔL were in a range of 1 or less. In addition, the L values were restored due to the heating. Furthermore, the photocatalytic activities were excellent. In all of Examples 1 to 5, and 7 to 9, the L values increased due to the heating. That is, the whiteness increased. In contrast, in Comparative Example 1, the degree of rutile was high, and titanium oxide particles having high purity were contained, the tin oxide particles did not contain phosphorus, and the white conductive powder was prepared by calcining in the air. In Comparative Example 1, the L value decreased by the irradiation of ultraviolet rays, and the L value was not restored even when being heated. In addition, the photocatalytic activity was also slightly inferior to those of Examples 1 to 4, and 7 to 9. Next, Comparative Example 2 is different from Comparative Example 1 in that the calcining was performed in a nitrogen gas atmosphere. In Comparative Example 2, the L value decreased by the irradiation of ultraviolet rays, and the L value was not restored even when being heated. Comparative Example 3 is a titanium oxide powder in which the degree of rutile is high and the purity is high. In Comparative Example 3, the powder volume resistivity was high, and conductivity was not obtained. Comparative Example 4 is a titanium oxide powder having substantially the same degree of rutile and purity as those of Examples 1 to 5, and 7 to 9. In Comparative Example 4, conductivity was not obtained, and the photocatalytic activity was poor. Here, when comparing Examples 1 to 5, and 7 to 9 with Comparative Example 4, the following will be understood. The titanium oxide particles defined in the present embodiment does not have high photocatalytic activity when being used alone (Comparative Example 4). However, when the titanium oxide particles are coated with the tin oxide particles defined in the present embodiment, conductivity is given thereto, and furthermore, the photocatalytic activity is greatly improved (Examples 1 to 5, and 7 to 9). In addition, Comparative Example 5 is a phosphorus-doped tin oxide powder. In Comparative Example 5, the L value was low, and the hiding power was poor. From results of comparison between FIGS. 1 and 2, it can be understood that in Example 1 and Comparative Example 1, surfaces of the titanium oxide powders are uniformly coated with the tin oxide particles. However, as described above, it could be understood that photocatalytic activities of Example 1 and Comparative Example 1 are different from each other.

The conductive mixed powder of Example 6 contains 100 parts by mass of the white conductive powder of Example 2, and 20 parts by mass of tin oxide powder. According to this, the powder volume resistivity of Example 6 decreased to approximately 24% of the powder volume resistivity of Example 2. From this result, it can be understood that the powder volume resistivity can be adjusted to a desired value by containing the tin oxide powder. The conductive mixed powder of Reference Example 1 contains 40 parts by mass of tin oxide powder. The powder volume resistivity of Reference Example 1 decreased to approximately 14% of the powder volume resistivity of Example 2, however, the L value was 72.8.

### Industrial Applicability

The white conductive powder of the present embodiment does not contain harmful components such as antimony, and is excellent in conductivity, whiteness, and photocatalytic activity. Accordingly, there is no concern about occurrence of environmental pollution or the like, and a burden to environment is less. Furthermore, the whiteness after the irradiation of ultraviolet rays is excellent. Accordingly, the white conductive powder of the present embodiment can be suitably applied to conductive paper, antistatic cloth, a conductive thread, an antistatic coating material, an antistatic wall, an antistatic roller, and the like in which the photocatalytic activity is required.

## Claims

1. A white conductive powder, comprising:
titanium oxide particles; and
tin oxide particles that coat surfaces of the titanium oxide particles,
wherein the mass ratio (SnO₂/TiO₂) of tin oxide to titanium oxide in the white conductive powder is in a range of 0.5 to 0.9,
the titanium oxide particles contain: K, Mg, Nb, and Zr each at a content of 0.01% by mass to 0.2% by mass
the white conductive powder does not contain antimony and indium,
a crystal structure of the titanium oxide particles is a rutile structure,
the degree of rutile of the titanium oxide particles is in a range of 90% to 98%, wherein the degree of rutile is calculated by a method including: measuring an X-ray diffraction pattern of the titanium oxide particles; obtaining an intensity area of a diffraction peak which is derived from each of the rutile structure, an anatase structure, and a brookite structure; calculating an intensity ratio of the diffraction peaks (the intensity area of the diffraction peak derived from the rutile structure / (the sum of the intensity areas of the diffraction peaks derived from the rutile structure, the anatase structure, and the brookite structure)) as the degree of rutile,
the average particle size of the titanium oxide particles is in a range of 100 nm to 500 nm, wherein the average particle size of the titanium oxide particles is a medium diameter measured by a laser diffraction and scattering method, and
the average particle size of the tin oxide particles is in a range of 1 nm to 50 nm, wherein the average particle size of the tin oxide particles is measured by scanning electron microscope.

2. The white conductive powder according to claim 1,
wherein the acetaldehyde decomposition capability of the white conductive powder is higher than the acetaldehyde decomposition capability of titanium oxide powder not coated with tin oxide particles, and
the acetaldehyde decomposition capability is measured by a method including:
filling test air consisting of air and acetaldehyde in a first Tedrar bag of 5 dm³ in such a manner that a concentration of acetaldehyde becomes 200 ppm;
transferring the test air in the first Tedrar bag into an evacuated second Tedrar bag having a volume of 3 dm³;
filling 5 g of the white conductive powder uniformly in a petri dish having a diameter of 100 mm and a height of 10 mm;
putting the petri dish into the first Tedrar bag;
sealing the first Tedrar bag hermetically and evacuating the first Tedrar bag;
transferring the test air in the second Tedrar bag into the first Tedrar bag;
putting the first Tedrar bag in an ultraviolet irradiation apparatus;
irradiating the first Tedrar bag with ultraviolet rays in a blackout curtain with an ultraviolet ray intensity of 1 mW/cm² for one hour;
after the irradiation, measuring an aldehyde concentration in the first Tedrar bag by a gas detecting tube; and
calculating a reduced amount of the acetaldehyde due to the irradiation of ultraviolet rays as the acetaldehyde decomposition capability.

3. The white conductive powder according to claim 1,
wherein the tin oxide particles contain phosphorus at a content of 0.1 to 10 parts by mass relative to 100 parts by mass of a sum of tin oxide and phosphorus.

4. The white conductive powder according to claim 1,
wherein a powder volume resistivity is in a range of 5×10⁴ Ω·cm or less, and
the powder volume resistivity is measured by a method including: putting the white conductive powder into a pressure container; compressing the white conductive powder at 10 MPa to prepare a compact body; and measuring a resistivity of the compact body by a digital multi-meter.

5. A conductive mixed powder, comprising:
the white conductive powder according to claim 1; and
a tin oxide powder.

6. A dispersion liquid, comprising:
a solvent; and
the white conductive powder according to claim 1 which is dispersed in the solvent.

7. A coating material, comprising:
the dispersion liquid according to claim 6; and
a binder.

8. A membrane composition, which is formed by applying the coating material according to claim 7 to an insulating base material.

## Patentansprüche

1. Weißes leitfähiges Pulver, umfassend:
Titanoxidpartikel; und
Zinnoxidpartikel, die Oberflächen der Titanoxidpartikel beschichten,
worin das Massen-Verhältnis (SnO₂/TiO₂) von Zinnoxid zu Titanoxid in dem weißen leitfähigen Pulver im Bereich von 0,5 bis 0,9 liegt,
die Titanoxidpartikel K, Mg, Nb und Zr jeweils in einem Gehalt von 0,01 Massen-% bis 0,2 Massen-% enthalten,
das weiße leitfähige Pulver kein Antimon und Indium enthält,
eine Kristallstruktur der Titanoxidpartikel eine Rutilstruktur ist,
der Grad an Rutil der Titanoxidpartikel im Bereich von 90% bis 98% liegt,
wobei der Grad von Rutil berechnet wird durch eine Methode, umfassend: Messen eines Röntgenbeugungsmusters der Titanoxidpartikel; Erhalten einer Intensitätsfläche eines Beugungspeaks, der jeweils abgeleitet ist von der Rutilstruktur, einer Anatasstruktur, und einer Brookitstruktur; Berechnen eines Intensitätsverhältnisses der Beugungspeaks (Intensitätsfläche des von der Rutilstruktur abgeleiteten Beugungspeaks / (Summe der Intensitätsflächen der von der Rutilstruktur, der Anatasstruktur und der Brookitstruktur abgeleiteten Beugungspeaks)) als Grad an Rutil,
die durchschnittliche Teilchengröße der Titanoxidpartikel in einem Bereich von 100 nm bis 500 nm liegt, wobei die durchschnittliche Teilchengröße der Titanoxidpartikel ein mittlerer Durchmesser ist, gemessen mittels eines Laserbeugungs- und Streuungsverfahrens, und
die durchschnittliche Teilchengröße der Zinnoxidpartikel in einem Bereich von 1 nm bis 50 nm liegt, wobei die durchschnittliche Teilchengröße der Zinnoxidpartikel mittels Rasterelektronenmikroskop gemessen wird.

2. Weißes leitfähiges Pulver gemäß Anspruch 1,
worin die Acetaldehyd-Zersetzungsfähigkeit des weißen leitfähigen Pulvers höher ist als die Acetaldehyd-Zersetzungsfähigkeit von Titanoxidpulver, das nicht mit Zinnoxidpartikeln beschichtet ist, und
die Acetaldehyd-Zersetzungsfähigkeit gemessen wird durch eine Methode, umfassend:
Einfüllen von Testluft bestehend aus Luft und Acetaldehyd in einen ersten Tedlar-Beutel von 5 dm³ in einer Weise, so dass die Konzentration von Acetaldehyd 200 ppm beträgt;
Überführen der Testluft in dem ersten Tedlar-Beutel in einen vakuumierten zweiten Tedlar-Beutel mit einem Volumen von 3 dm³;
gleichmäßiges Einfüllen von 5 g des weißen leitfähigen Pulvers in eine Petrischale mit einem Durchmesser von 100 mm und einer Höhe von 10 mm;
Einführen der Petrischale in den ersten Tedlar-Beutel;
hermetisches Versiegeln des ersten Tedlar-Beutels und Vakuumieren des ersten Tedlar-Beutels;
Überführen der Testluft aus dem zweiten Tedlar-Beutel in den ersten Tedlar-Beutel;
Einführen des ersten Tedlar-Beutels in ein UV-Strahlengerät;
Bestrahlung des ersten Tedlar-Beutels mit UV-Strahlen in einem Verdunkelungsvorhang mit einer UV-Strahlenintensität von 1 mW/cm² für eine Stunde;
nach der Bestrahlung Messung der Aldehyd-Konzentration in dem ersten Tedlar-Beutel mittels Gasdetektions-Röhre; und
Berechnung des reduzierten Gehalts von Acetaldehyd aufgrund der UV-Bestrahlung als die Acetaldehyd-Zersetzungsfähigkeit.

3. Weißes leitfähiges Pulver gemäß Anspruch 1,
worin die Zinnoxidpartikel Phosphor in einer Menge von 0,1 bis 10 Massenteilen bezogen auf 100 Massenteile der Summe von Zinnoxid und Phosphor enthalten.

4. Weißes leitfähiges Pulver gemäß Anspruch 1,
worin der Pulverdurchgangswiderstand im Bereich von 5 x 10⁴ Ω·cm oder weniger liegt, und
der Pulverdurchgangswiderstand gemessen wird durch eine Methode, umfassend: Einführen des weißen leitfähigen Pulvers in einen Druckbehälter; Komprimieren des weißen leitfähigen Pulvers bei 10 MPa um einen komprimierten Körper herzustellen; Messen des Widerstands des komprimierten Körpers mittels digitalem Multimeter.

5. Leitfähiges gemischtes Pulver, umfassend:
das weiße leitfähige Pulver gemäß Anspruch 1; und
ein Zinnoxidpulver.

6. Dispersionsflüssigkeit, umfassend:
ein Lösungsmittel; und
das weiße leitfähige Pulver gemäß Anspruch 1, das in dem Lösungsmittel dispergiert ist.

7. Beschichtungsmaterial, umfassend:
die Dispersionsflüssigkeit gemäß Anspruch 6; und
ein Bindemittel.

8. Membranzusammensetzung, die durch Aufbringen des Beschichtungsmaterials gemäß Anspruch 7 auf ein isolierendes Basismaterial gebildet wird.

## Revendications

1. Poudre conductrice blanche, comprenant :
des particules d'oxyde de titane ; et
des particules d'oxyde d'étain qui recouvrent les surfaces des particules d'oxyde de titane,
dans laquelle le rapport massique (SnO₂/TiO₂) de l'oxyde d'étain sur l'oxyde de titane dans la poudre conductrice blanche se trouve dans une plage allant de 0,5 à 0,9,
les particules d'oxyde de titane contiennent : K, Mg, Nb et Zr chacun à une teneur allant de 0,01% en masse à 0,2% en masse ;
la poudre conductrice blanche ne contient pas d'antimoine et d'indium,
une structure cristalline des particules d'oxyde de titane est une structure rutile,
le degré de rutile des particules d'oxyde de titane se trouve dans une plage allant de 90% à 98%, où le degré de rutile est calculé par un procédé comportant le fait : de mesurer un diagramme de diffraction des rayons X des particules d'oxyde de titane ; d'obtenir une zone d'intensité d'un pic de diffraction qui est dérivé de chacune de la structure rutile, d'une structure anatase et d'une structure brookite ; de calculer un rapport d'intensité des pics de diffraction (la zone d'intensité du pic de diffraction dérivé de la structure rutile/(la somme des zones d'intensité des pics de diffraction dérivés de la structure rutile, de la structure anatase et de la structure brookite)) comme étant le degré de rutile,
la taille moyenne de particules des particules d'oxyde de titane se trouve dans une plage allant de 100 nm à 500 nm, où la taille moyenne de particules des particules d'oxyde de titane est un diamètre moyen mesuré par un procédé de diffraction et de diffusion laser, et
la taille moyenne de particules des particules d'oxyde d'étain se trouve dans une plage allant de 1 nm à 50 nm, où la taille moyenne de particules des particules d'oxyde d'étain est mesurée par un microscope électronique à balayage.

2. Poudre conductrice blanche selon la revendication 1,
dans laquelle l'aptitude à décomposer l'acétaldéhyde de la poudre conductrice blanche est supérieure à l'aptitude à décomposer l'acétaldéhyde de la poudre d'oxyde de titane non revêtue de particules d'oxyde d'étain, et
l'aptitude à décomposer l'acétaldéhyde est mesurée par un procédé comportant le fait :
d'introduire l'air d'essai constitué d'air et d'acétaldéhyde dans un premier sac Tedlar de 5 dm³ de manière à ce qu'une concentration d'acétaldéhyde devienne égale à 200 ppm ;
de transférer l'air d'essai dans le premier sac Tedlar vers un deuxième sac Tedlar sous vide ayant un volume de 3 dm³,
d'introduire 5 g de la poudre conductrice blanche uniformément dans une boîte de Pétri ayant un diamètre de 100 mm et une hauteur de 10 mm ;
de mettre la boîte de Pétri dans le premier sac Tedlar ;
de sceller hermétiquement le premier sac Tedlar et de faire le vide dans le premier sac Tedlar ;
de transférer l'air d'essai dans le deuxième sac Tedlar vers le premier sac Tedlar ;
de mettre le premier sac Tedlar dans un appareil d'irradiation aux ultraviolets ;
d'irradier le premier sac Tedlar avec des rayons ultraviolets dans un rideau occultant avec une intensité de rayons ultraviolets de 1 mW/cm² pendant une heure ;
de mesurer, après l'irradiation, une concentration d'aldéhyde dans le premier sac Tedlar par un tube de détection de gaz ; et
de calculer une quantité réduite de l'acétaldéhyde à cause de l'irradiation avec des rayons ultraviolets comme étant l'aptitude à décomposer l'acétaldéhyde.

3. Poudre conductrice blanche selon la revendication 1,
dans laquelle les particules d'oxyde d'étain contiennent du phosphore à une teneur allant de 0,1 à 10 partie(s) en masse par rapport à 100 parties en masse d'une somme d'oxyde d'étain et de phosphore.

4. Poudre conductrice blanche selon la revendication 1,
dans laquelle la résistivité volumique de poudre est inférieure ou égale à 5 x 10⁴ Ω.cm, et
la résistivité volumique de poudre est mesurée par un procédé comportant le fait : de mettre la poudre conductrice blanche dans une cuve sous pression ; de comprimer la poudre conductrice blanche à 10 MPa pour préparer un corps compact ; et de mesurer une résistivité du corps compact par un multimètre numérique.

5. Poudre mélangée conductrice, comprenant :
la poudre conductrice blanche selon la revendication 1 ; et
une poudre d'oxyde d'étain.

6. Liquide de dispersion, comprenant :
un solvant ; et
la poudre conductrice blanche selon la revendication 1 qui est dispersée dans le solvant.

7. Matériau de revêtement, comprenant :
le liquide de dispersion selon la revendication 6 ; et
un liant.

8. Composition de membrane, qui est formée en appliquant le matériau de revêtement selon la revendication 7 à un matériau de base isolant.
